# EUROPEAN PATENT APPLICATION

(11) **EP 3 876 159 A1**
(43) Date of publication of application: **08.09.2021**
(21) Application number: 20207014.0
(22) Date of filing: 11.11.2020
(51) Int. Cl.: G06N 3/04, G06F 9/38, G06N 3/063, G06F 17/15

(54) **METHOD AND APPARATUS FOR PROCESSING CONVOLUTION OPERATION ON LAYER IN NEURAL NETWORK**

(30) Priority: 06.03.2020 KR 20200028360
(71) Applicant: Samsung Electronics Co., Ltd., Suwon-si 16677 (KR)
(72) Inventor: Yoo, Jaehyoung, 16678 Gyeonggi-do (KR); Son, Jinwoo, 16678 Gyeonggi-do (KR); Son, Changyong, 16678 Gyeonggi-do (KR); Lee, Seohyung, 16678 Gyeonggi-do (KR); Jung, Sangil, 16678 Gyeonggi-do (KR); Choi, Changin, 16678 Gyeonggi-do (KR)
(74) Representative: Arnold & Siedsma

(57) **Abstract**

Disclosed are methods and apparatuses for processing a convolution operation on a layer in a neural network. The method includes extracting a first target feature vector from a target feature map, extracting a first weight vector matched with the first target feature vector from a first-type weight element, based on matching relationships for depth-wise convolution operations between target feature vectors of the target feature map and weight vectors of the first-type weight element, generating a first intermediate feature vector by performing multiplication between the first target feature vector and the first weight vector, generating a first hidden feature vector by accumulating the first intermediate feature vector and a second intermediate feature vector generated based on a second target feature vector, and generating a first output feature vector of an output feature map based on a point-wise convolution operation between the first hidden feature vector and a second-type weight element.

## Description

### BACKGROUND

### Field

The following description relates to a method and apparatus for processing a convolution operation on a layer in a neural network.

### 2. Description of Related Art

Automation of a recognition process has been implemented through a neural network model implemented, for example, by a processor as a special computing structure, which provides intuitive mapping for computation between an input pattern and an output pattern after training. A trained ability to generate such mapping is the learning ability of a neural network. Furthermore, a neural network trained and specialized through special training has, for example, a generalization ability to provide a relatively accurate output with respect to an untrained input pattern.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a processor-implemented method of processing a convolution operation on a layer in a neural network, the method including extracting a first target feature vector from a target feature map, extracting a first weight vector matched with the first target feature vector from a first-type weight element, based on matching relationships for depth-wise convolution operations between target feature vectors of the target feature map and weight vectors of the first-type weight element, generating a first intermediate feature vector by performing a multiplication operation between the first target feature vector and the first weight vector, generating a first hidden feature vector by accumulating the first intermediate feature vector generated based on the first target feature vector and a second intermediate feature vector generated based on a second target feature vector, and generating a first output feature vector of an output feature map based on a point-wise convolution operation between the first hidden feature vector and a second-type weight element.

The first hidden feature vector may include the first intermediate feature vector and the second intermediate feature vector, and may be completed in response to all needed elements being accumulated.

The first hidden feature vector may include generating the first hidden feature vector based on accumulating the first intermediate feature vector and the second intermediate feature vector in a first space of a hidden buffer.

The first space of the hidden buffer may be reused to accumulate intermediate feature vectors used to generate a second hidden feature vector, in response to the first output feature vector being generated.

A plurality of weight vectors including the first weight vector may be matched with the first target feature vector based on the matching relationships, and a plurality of hidden vectors may be generated based on multiplication operations between the first target feature vector and respective weight vectors of the plurality of weight vectors.

The target feature map, the first-type weight element, the second-type weight element, and the output feature map may each be in an interleaved format.

The first target feature vector, the first weight vector, the first intermediate feature vector, the second intermediate feature vector, the first hidden feature vector, and the first output feature vector may each correspond to a channel direction.

The method may include extracting the second target feature vector from the target feature map, extracting a second weight vector matched with the second target feature vector from the first-type weight element based on the matching relationships, and generating the second intermediate feature vector by performing a multiplication operation between the second target feature vector and the second weight vector.

The generating of the first output feature vector may include generating the first output feature vector by performing point-wise convolution operations between the first hidden feature vector and respective weight vectors of the second-type weight element.

The depth-wise convolution operation and the point-wise convolution operation may constitute at least a portion of a depth-wise separable convolution (DSC) operation.

The first-type weight element may be used to extract a spatial feature, and the second-type weight element may be used to extract a combination feature.

The target feature map may correspond to an input feature map or a hidden feature map.

The depth-wise convolution operation and the point-wise convolution operation may each be processed for each single instruction multiple data (SIMD) operation.

In another general aspect, there is provided an apparatus for processing a convolution operation on a layer in a neural network, the apparatus including a memory configured to store executable instructions, and a processor configured to execute the instructions to extract a first target feature vector from a target feature map, extract a first weight vector matched with the first target feature vector from a first-type weight element, based on matching relationships for depth-wise convolution operations between target feature vectors of the target feature map and weight vectors of the first-type weight element, generate a first intermediate feature vector by performing a multiplication operation between the first target feature vector and the first weight vector, generate a first hidden feature vector by accumulating the first intermediate feature vector generated based on the first target feature vector and a second intermediate feature vector generated based on a second target feature vector, and generate a first output feature vector of an output feature map based on a point-wise convolution operation between the first hidden feature vector and a second-type weight element.

the processor may be configured to execute the instructions to perform any method described above.

Other features and aspects will be apparent from the following detailed description, the drawings, and the claims.

### BRIEF DESCRIPTION OF THE DRAWINGS

FIG. 1 illustrates an example of processing a convolution operation by a processing apparatus.
FIGS. 2 and 3 illustrate examples of depth-wise separable convolutions (DSCs).
FIG. 4 illustrates an example of processing a DSC.
FIGS. 5 and 6 illustrate examples of determining matching relationships between target feature vectors and weight vectors.
FIGS. 7 and 8 illustrate an example of generating and storing intermediate feature vectors.
FIG. 9 illustrates an example of generating hidden feature vectors based on an accumulation of intermediate feature vectors.
FIG. 10 illustrates an example of generating an output feature vector through a point-wise convolution operation.
FIG. 11 illustrates an example of reusing a buffer.
FIG. 12 illustrates an example of processing a convolution operation.
FIG. 13 illustrates an example of a processing apparatus for processing a convolution operation.
FIG. 14 illustrates an example of an electronic device.
Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween. Likewise, similar expressions, for example, "between" and "immediately between," and "adjacent to" and "immediately adjacent to," are also to be construed in the same way. As used herein, the term "and/or" includes any one and any combination of any two or more of the associated listed items.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Hereinafter, examples will be described in detail with reference to the accompanying drawings. In the drawings, like reference numerals are used for like elements.

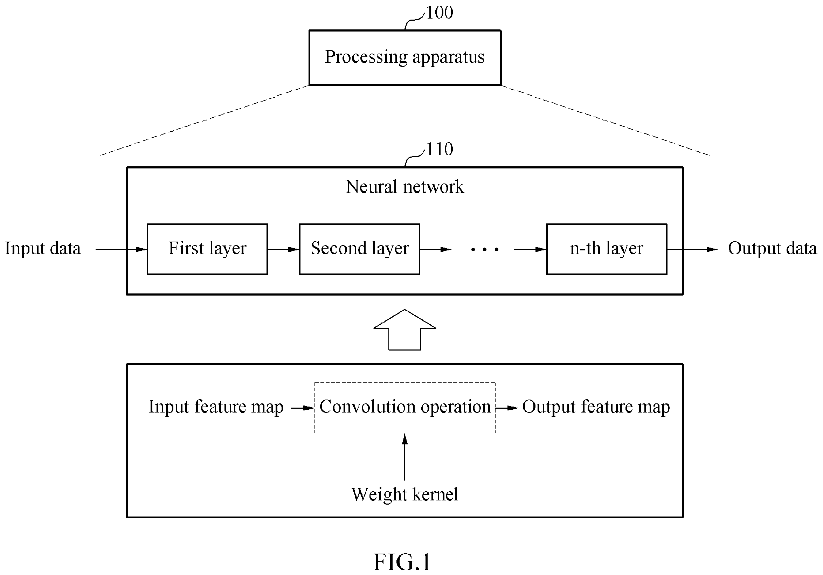

FIG. 1 illustrates an example of processing a convolution operation by a processing apparatus. Referring to FIG. 1, a processing apparatus 100 may include a neural network 110 and process an operation on the neural network 110. For example, the operation on the neural network 110 may include a convolution operation on a layer in the neural network 110. Output data of the neural network 110 may be generated as the operation on the neural network 110 is processed, and the output data of the neural network 110 may be used for techniques such as object recognition, user verification, and voice recognition.

The neural network 110 may perform an object recognition operation or a user verification operation by mapping input data and output data which are in a non-linear relationship based on deep learning. Deep learning is a machine learning technique for solving an issue such as image or speech recognition from a big data set. Deep learning is construed as an optimization problem solving process of finding a point at which energy is minimized while training the neural network 110 using prepared training data. Through supervised or unsupervised learning of deep learning, a structure of the neural network 110 or a weight corresponding to a model is obtained, and the input data and the output data are mapped to each other through the weight.

The neural network 110 may correspond to a deep neural network (DNN) including a plurality of layers. The plurality of layers may include an input layer, at least one hidden layer, and an output layer. A first layer, a second layer, and an n-th layer shown in FIG. 1 may be at least a portion of the plurality of layers. The neural network 110 may include any one or any combination of networks such as, for example, a fully connected network, a convolutional neural network (CNN), and a recurrent neural network (RNN). For example, at least a portion of the plurality of layers in the neural network 110 may correspond to the CNN, and another portion thereof may correspond to the fully connected network.

Data input into each layer in the CNN may be referred to as an input feature map, and data output from each layer may be referred to as an output feature map. The input feature map and the output feature map may also be referred to as activation data. In the input layer, the input feature map may correspond to input data.

To process the operation on the neural network 110, the processing apparatus 100 may process various operation blocks. The operation block may include any one or any combination of at least one convolution operation (for example, a single convolution operation or a plurality of convolution operations), a skip connection, and a pooling operation. For example, the operation blocks may include a convolution operation on a layer (for example, a convolutional layer) in the neural network 110. The processing apparatus 100 may perform, with respect to each convolutional layer, convolution operations between an input feature map and weight kernels and generate an output feature map based on a result of the convolution operations.

The processing apparatus 100 may perform the convolution operation by processing operation elements included in the convolution operation in various manners. The processing apparatus 100 may perform the convolution operation in a depth-wise separable convolution (DSC) manner. A DSC is a type of convolution operation for performing a convolution operation by distinguishing spatial feature extraction and combination feature extraction. In this example, spatial features may be extracted through a depth-wise convolution operation, and combination features may be extracted through a point-wise convolution operation.

If the width and the depth of the neural network 110 are sufficiently great, the neural network 110 may have a capacity sufficient to implement a predetermined function. The neural network 110 may achieve an optimized performance when learning a sufficiently large amount of training data through an appropriate training process.

Hereinafter, the neural network 110 or a weight kernel may be expressed as being trained "in advance". Here, "in advance" means before the neural network 110 is "started". The neural network 110 that is "started" means the neural network 110 has been prepared for inference. For example, the neural network 110 that is "started" may include the neural network 110 loaded to a memory, or the neural network 110 receiving input data for inference after loaded to the memory.

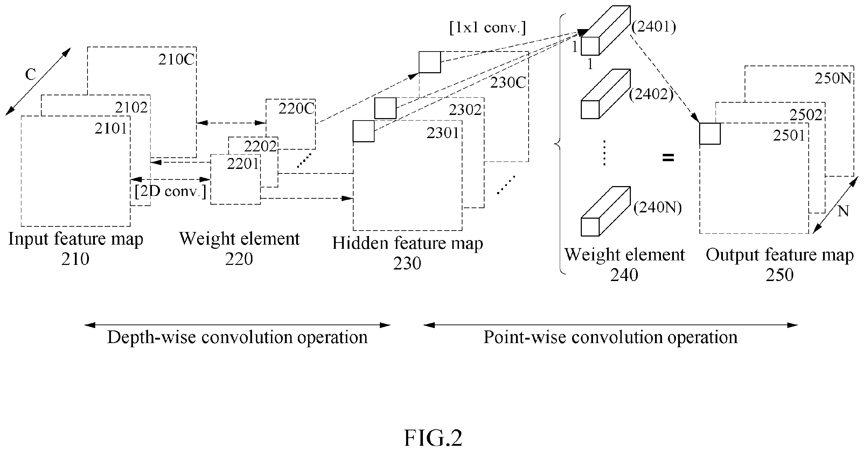

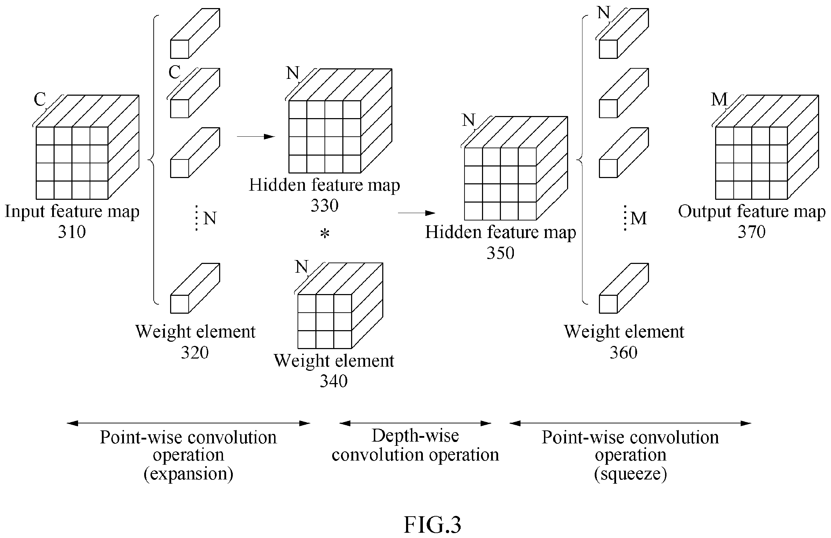

FIGS. 2 and 3 illustrate examples of DSCs. As described above, a DSC is a type of convolution operation for performing a convolution operation by distinguishing spatial feature extraction and combination feature extraction, and may include at least one depth-wise convolution operation and at least one point-wise convolution operation. The at least one depth-wise convolution operation and the at least one point-wise convolution operation may be combined in various patterns for DSC. FIGS. 2 and 3 illustrate examples of DSCs. The DSCs may be performed through combinations of different patterns of at least one depth-wise convolution operation and at least one point-wise convolution operation.

Referring to FIG. 2, a DSC includes a depth-wise convolution operation and a point-wise convolution operation. A hidden feature map 230 is generated based on a depth-wise convolution operation between an input feature map 210 and a weight element 220, and an output feature map 250 is generated based on a point-wise convolution operation between the hidden feature map 230 and a weight element 240.

In FIG. 2, the input feature map 210, the weight element 220, the hidden feature map 230, and the output feature map 250 are each shown in the form of a set of planes, and the weight element 240 is shown in the form of a bar. Each plane and each bar may be distinguished for each channel. Each plane may represent data two-dimensionally, and each bar may represent data arranged one-dimensionally. Here, data may be elements. Planes arranged consecutively may be represented in the form of a three-dimensionally (3D) box. For example, the input feature map 210 of FIG. 2 may be represented as an input feature map 310 of FIG. 3. Such data forms are provided for better understanding of the process of processing an operation. In practice, data may be stored one-dimensionally in a memory.

The input feature map 210 includes input feature planes 2101, 2102, ..., 210C. Each of the input feature planes 2101, 2102, ..., 210C may have a width W and a height H. The number of input feature planes 2101, 2102, ..., 210C may be C. The input feature planes 2101, 2102, ..., 210C may correspond to different input channels. Thus, C may denote the number of input channels.

Here, W and H may denote the number of input elements. That is, each of the input feature planes 2101, 2102, ..., 210C may include W input elements in the horizontal direction and H input elements in the vertical direction. Hereinafter, unless otherwise mentioned, it may be assumed that elements of a convolution operation, such as the input feature map 210, the weight element 220, the hidden feature map 230, the weight element 240, and the output feature map 250, are configured to be element-wise.

The weight element 220 includes weight planes 2201, 2202, ..., 220C. Each of the weight planes 2201, 2202, ..., 220C may have a width K1 and a height K2. Hereinafter, for ease of description, it may be assumed that K1 and K2 are equally K. For example, it may be assumed that the size of each of the weight planes 2201, 2202, ..., 220C is 3x3. The number of weight planes 2201, 2202, ..., 220C may be C. Like the input feature planes 2101, 2102, ..., 210C, the weight planes 2201, 2202, ..., 220C may correspond to different input channels.

The hidden feature map 230 is generated based on the depth-wise convolution operation between the input feature map 210 and the weight element 220. The weight element 220 is for spatial feature extraction, and the type of the weight element 220 will be hereinafter referred to as a first type.

The depth-wise convolution operation may include two-dimensional (2D) convolution operations between the input feature map 210 and the weight element 220. 2D convolution operations between input feature planes and weight planes of input channels corresponding to each other may be performed. The 2D convolution operations for the depth-wise convolution operation may include, for example, a 2D convolution operation between the input feature plane 2101 and the weight plane 2201, a 2D convolution operation between the input feature plane 2102 and the weight plane 2202, ..., and a 2D convolution operation between the input feature plane 210C and the weight plane 220C.

The hidden feature map 230 includes hidden feature planes 2301, 2302, ..., 230C. Each of the hidden feature planes 2301, 2302, ..., 230C may have a width W and a height H. It is assumed that the size of the hidden feature planes 2301, 2302, ..., 230C is WxH, which is the same as the size of the input feature planes 2101, 2102, ..., 210C. However, in another example, the size of the hidden feature planes 2301, 2302, ..., 230C may be W2xH2, which is different from the size of the input feature planes 2101, 2102, ..., 210C. The number of hidden feature planes 2301, 2302, ..., 230C may be C. Like the input feature planes 2101, 2102, ..., 210C and the weight planes 2201, 2202, ..., 220C, the hidden feature planes 2301, 2302, ..., 230C may correspond to different input channels.

A hidden feature plane of a corresponding input channel may be generated according to each 2D convolution operation. For example, the hidden feature plane 2301 may be generated according to a 2D convolution operation between the input feature plane 2101 and the weight plane 2201, the hidden feature plane 2302 may be generated according to a 2D convolution operation between the input feature plane 2102 and the weight plane 2202, and the hidden feature plane 230C may be generated according to a 2D convolution operation between the input feature plane 210C and the weight plane 220C.

The output feature map 250 is generated based on the point-wise convolution operation between the hidden feature map 230 and the weight element 240. The weight element 240 includes weight vectors 2401, 2402, ..., 240N. Each of the weight vectors 2401, 2402, ..., 240N may have a size of 1×1, and the number of weight vectors 2401, 2402, ..., 240N may be N. The weight vectors 2401, 2402, ..., 240N may correspond to different output channels. Thus, N may denote the number of output channels. The weight element 240 is for combination feature extraction, and the type of the weight element 240 will be hereinafter referred to as a second type.

The point-wise convolution operation may include 1×1 convolution operations between the hidden feature map 230 and the weight element 240. In an example, a 1×1 convolution operation between each of the weight vectors 2401, 2402, ..., 240N and the hidden feature map 230 may be performed based on sliding window. The sliding window-based 1×1 convolution operations for the point-wise convolution operation may include, for example, a sliding window-based 1×1 convolution operation between the hidden feature map 230 and the weight vector 2401, a sliding window-based 1×1 convolution operation between the hidden feature map 230 and the weight vector 2402, and a sliding window-based 1×1 convolution operation between the hidden feature map 230 and the weight vector 240N.

The output feature map 250 includes output feature planes 2501, 2502, ..., 250N. Each of the output feature planes 2501, 2502, ..., 250N may have a width W and a height H. It is assumed that the size of the output feature planes 2501, 2502, ..., 250N is WxH, which is the same as the size of the input feature planes 2101, 2102, ..., 210C. However, in another example, the size of the output feature planes 2501, 2502, ..., 250N may be W3xH3, which is different from the size of the input feature planes 2101, 2102, ..., 210C. The number of output feature planes 2501, 2502, ..., 250N may be N. Like the weight vectors 2401, 2402, ..., 240N, the output feature planes 2501, 2502, ..., 250N may correspond to different output channels.

A 1×1 convolution operation may be performed by sliding the hidden feature map 230 to each of the weight vectors 2401, 2402, ..., 240N, and an output feature plane of a corresponding output channel may be generated according to each sliding window-based 1×1 convolution operation. For example, a hidden feature vector may be obtained by extracting an element having the same offset (for example, a first offset) from each of the hidden feature planes 2301, 2302, ..., 230C, and an output element having the offset (for example, the first offset) in the output feature plane 2501 may be generated based on a 1×1 convolution operation between the obtained hidden feature vector and the weight vector 2401.

Hidden feature vectors corresponding to the other offsets of the hidden feature planes 2301, 2302, ..., 230C may be obtained through sliding window, and the output feature plane 2501 may be completed by performing 1×1 convolution operations between the obtained hidden feature vectors and the weight vector 2401. Completing the output feature plane 2501 may indicate determining the values of output elements in the output feature plane 2501. Similarly, the output feature map 2502 may be generated according to a sliding window-based 1×1 convolution operation between the hidden feature map 230 and the weight vector 2402, and the output feature map 250N may be generated according to a sliding window-based 1×1 convolution operation between the hidden feature map 230 and the weight vector 240N.

Referring to FIG. 3, a DSC according to another example, includes a depth-wise convolution operation and a point-wise convolution operation. Unlike the DSC of FIG. 2, the DSC of FIG. 3 includes two point-wise convolution operations. The first point-wise convolution operation may be for expansion, and the second point-wise convolution operation may be for squeezing.

A hidden feature map 330 is generated based on a point-wise convolution operation between an input feature map 310 and a weight element 320, and a hidden feature map 350 is generated based on a depth-wise convolution operation between the hidden feature map 330 and a weight element 340. An output feature map 370 is generated based on a point-wise convolution operation between the hidden feature map 350 and a weight element 360. The description of FIG. 2 may apply to the operation process of the point-wise convolution operations and the depth-wise convolution operation. C may denote the number of input channels, N may denote the number of hidden channels, and M may denote the number of output channels.

Hereinafter, the term "target feature map" will be used. A hidden feature map may be generated based on a depth-wise convolution operation with respect to a target feature map, and a output feature map may be generated based on a point-wise convolution operation with respect to the hidden feature map. In an example, the target feature map may be the input feature map 210 of FIG. 2 or the hidden feature map 330 of FIG. 3. Further, the hidden feature map generated based on the target feature map may be the hidden feature map 230 of FIG. 2 or the hidden feature map 350 of FIG. 3. The output feature map may be the output feature map 250 of FIG. 2 or the output feature map 370 of FIG. 3.

Data may be stored in a memory in various ordering manners. For example, the data ordering manners may include a planar manner and an interleaved manner. Data ordering is applied in an order of a width direction, a height direction, and a channel direction according to the planar manner, and data ordering is applied in an order of the channel direction, the width direction, and the height direction according to the interleaved manner.

Before a DSC operation, an interleaved format may be applied to data that is to be used for the DSC operation. For example, the interleaved format may be applied to the input feature map 210, the weight element 220, and the weight element 240 of FIG. 2, and the interleaved format may be applied to the input feature map 310, the weight element 320, the weight element 340, and the weight element 360 of FIG. 3.

Further, the interleaved format of the data may be maintained until an output feature map is generated. For example, in FIG. 2, the hidden feature map 230 in the interleaved format may be generated by performing a depth-wise convolution operation between the input feature map 210 in the interleaved format and the weight element 220 in the interleaved format. Further, the output feature map 250 in the interleaved format may be generated by performing a depth-wise convolution operation between the hidden feature map 230 in the interleaved format and the weight element 240 in the interleaved format. Similarly, in the example of FIG. 3, the interleaved format of the data may be maintained until the output feature map 370 in the interleaved format is generated.

The interleaved manner may be advantageous in securing the continuity of data. Thus, memory access may be greatly reduced by applying the interleaved format to data. Further, the interleaved manner may be advantageous in single instruction multiple data (SIMD) processing. SIMD refers to a type of operation processing of a processor that processes multiple data using a single instruction. In addition, according to examples set forth below, SIMD processing may be performed by loading data depending on a SIMD operation unit (for example, 4, 8, 16, 32, 64, 128, ..., and the like), whereby the efficiency of SIMD processing may be maximized. For example, a depth-wise convolution operation and a point-wise convolution operation may each be processed depending on the SIMD operation unit. Further, since the interleaved format of the data is maintained until an output feature map is generated, an additional column buffer for converting the data format may not be required.

Further, according to the examples, a depth-wise convolution operation is performed for each target feature vector, using matching relationships between target feature vectors and weight vectors, wherein the operation is performed for each target feature vector arranged in the interleaved manner, such that an additional column buffer for performing a SIMD operation is not required. Results of the depth-wise convolution operation are accumulated in a hidden buffer for each target feature vector, a point-wise convolution operation is performed for each hidden feature vector, each time a single hidden feature vector is completed. For example, if a first hidden feature vector is generated through a depth-wise convolution operation for each target feature vector, a first output feature vector may be generated through a point-wise convolution operation with respect to the first hidden feature vector. If the first output feature vector is generated, the first hidden feature vector is not used for a DSC any further. Thus, a memory space for the first hidden feature vector may be reused to store another hidden feature vector. Therefore, a memory space for storing a hidden feature map may be saved.

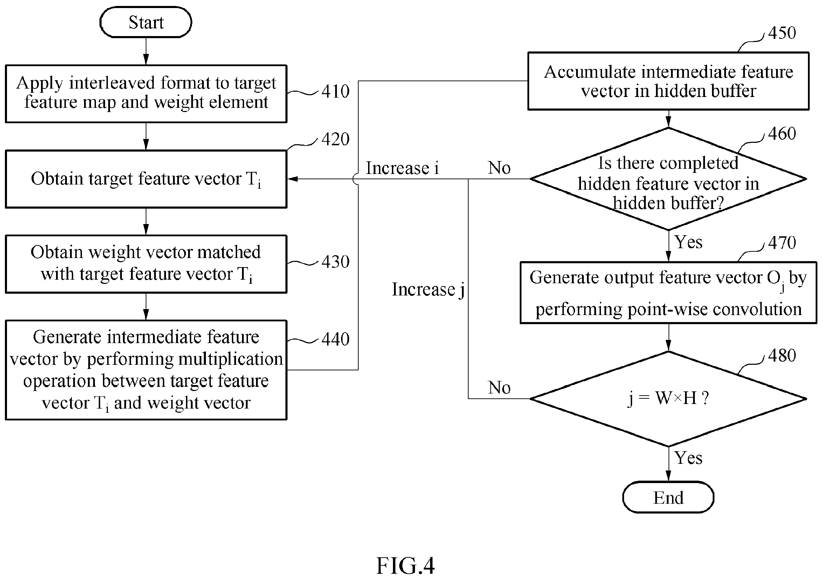

FIG. 4 illustrates an example of processing a DSC. The operations in FIG. 4 may be performed in the sequence and manner as shown, although the order of some operations may be changed or some of the operations omitted without departing from the scope of the illustrative examples described. Many of the operations shown in FIG. 4 may be performed in parallel or concurrently. One or more blocks of FIG. 4, and combinations of the blocks, can be implemented by special purpose hardware-based computer, such as a processor, that perform the specified functions, or combinations of special purpose hardware and computer instructions. In addition to the description of FIG. 4 below, the descriptions of FIGS. 1-3 are also applicable to FIG. 4, and are incorporated herein by reference. Thus, the above description may not be repeated here.

Referring to FIG. 4, in operation 410, a processing apparatus applies an interleaved format to a target feature map and a weight element. As described above, the target feature map may correspond to the input feature map 210 of FIG. 2 and the hidden feature map 330 of FIG. 3. However, in the example of FIG. 3, the interleaved format may be applied to the input feature map 310. In this example, the hidden feature map 330 in the interleaved format may be generated through a point-wise convolution operation between the input feature map 310 in the interleaved format and the weight element 320 in the interleaved format. Thus, a separate format conversion with respect to the hidden feature map 330 may not need to be performed.

Further, weight elements to which a format conversion is applied in this operation may correspond to the weight element 220 and the weight element 240 of FIG. 2, and the weight element 320, the weight element 340, and the weight element 360 of FIG. 3. However, the interleaved format may be applied to the second-type weight elements (for example, the weight element 240 of FIG. 2, and the weight element 320 and the weight element 360 of FIG. 3) during a training process. Thus, a separate format conversion may not be performed with respect to the second-type weight elements.

In operation 420, the processing apparatus obtains a target feature vector Tᵢ. The processing apparatus may obtain the target feature vector Tᵢ by extracting the target feature vector Tᵢ from the target feature map. The target feature vector Tᵢ may correspond to a portion of the target feature map. For example, the size of the target feature map may be WxHxC or WxHxN, and the size of the target feature vector may be 1×1×C or 1×1×N. In this example, the target feature map may include WxH target feature vectors Tᵢ, wherein i may be a natural number between 1 and WxH. i may be initially set to 1.

In operation 430, the processing apparatus obtains a weight vector matched with the target feature vector Tᵢ. The weight vector may be a portion of the weight element. Here, the weight element may be of a first type. For example, the size of the weight element may be KxKxC or KxKxN, and the size of the weight vector may be 1×1×C or 1×1×N. In this example, the weight element may include KxK weight vectors.

Hereinafter, the weight vector may be indicated by W1ₘ. Here, 1 denotes the type of the weight element to which the weight vector belongs, and m denotes an index of the weight vector. For example, W1₁ may be a first weight vector belonging to a first-type weight element, and W2₉ may be a ninth weight vector belonging to a second-type weight element.

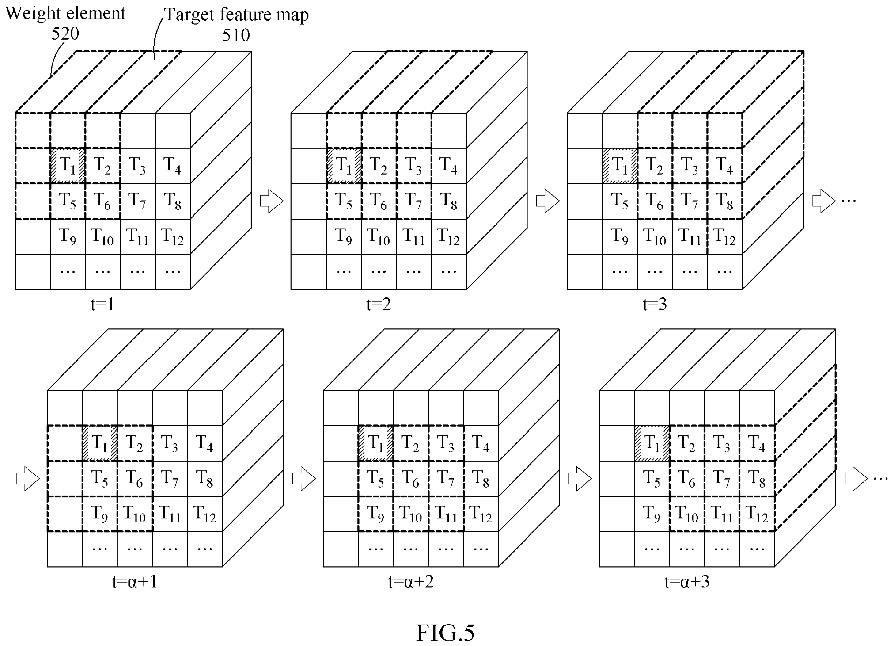

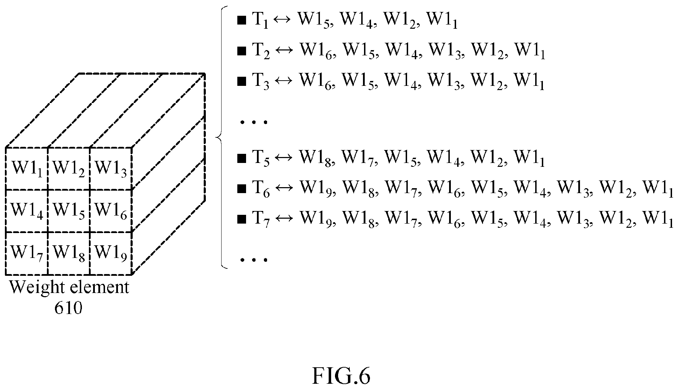

The processing apparatus may perform a depth-wise convolution operation using matching relationships between target feature vectors and weight vectors. During a sliding window process for the depth-wise convolution operation, a matching relationship between a target feature vector and at least one weight vector requiring an operation with the target feature vector may be formed. Hereinafter, the matching relationships between the target feature vectors and the weight vectors will be described with reference to FIGS. 5 and 6.

FIGS. 5 and 6 illustrate examples of determining matching relationships between target feature vectors and weight vectors for a depth-wise convolution operation. Referring to FIG. 5, a target feature map 510 includes target feature vectors T₁, T₂, T₃, .... A region corresponding to a weight element 520 is indicated with broken lines. A correspondence between the weight element 520 and the target feature map 510 may be known in a sliding window process performed over time t through the position of the weight element 520.

Weight vectors of the weight element 520 may be indicated as W1₁ through W1₉, as shown in a weight element 610 of FIG. 6. In this example, a matching relationship between the target feature vector T₁ and the weight vector W1₅ may be formed at t=1 of FIG. 5. Further, a matching relationship between the target feature vector T₁ and the weight vector W1₄ may be formed at t=2, a matching relationship between the target feature vector T₁ and the weight vector W1₂ may be formed at t=α+1, and a matching relationship between the target feature vector T₁ and the weight vector W1₁ may be formed at t=α+2. Finally, the matching relationships between the target feature vector T₁ and the weight vectors W1₅, W1₄, W1₂, and W1₁ may be formed.

Referring to FIG. 6, matching relationships between some target feature vectors and at least one weight vector are illustrated. As described above, matching relationships between the target feature vector T₁ and the weight vectors W1₅, W1₄, W1₂, and W1₁ may be formed. Further, matching relationships between the target feature vector T₂ and the weight vectors W1₆, W1₅, W1₄, W1₃, W1₂, and W1₁ may be formed. For example, a matching relationship between the target feature vector T₂ and the weight vector W1₆ is formed at t=1, a matching relationship between the target feature vector T₂ and the weight vector W1₅ is formed at t=2, a matching relationship between the target feature vector T₂ and the weight vector W1₄ is formed at t=3, a matching relationship between the target feature vector T₂ and the weight vector W1₃ is formed at t=α+1, a matching relationship between the target feature vector T₂ and the weight vector W1₂ is formed at t=α+2, and a matching relationship between the target feature vector T₂ and the weight vector W1₁ is formed at t=α+3.

Similarly, matching relationships between each of the target feature vectors T₃ and T₅ and the weight vectors W1₆ to W1₁ may be formed, and matching relationships between each of the target feature vectors T₆ and T₇ and the weight vectors W1₉ to W1₁ may be formed. A matching relationship between each of the remaining target feature vectors and at least one weight vector may be determined in a similar manner.

FIG. 5 shows the sliding window process according to time t. However, the sliding window process is provided only for ease of description of the process of determining matching relationships, and the convolution operation is not limited to the sliding window process described above. For example, if matching relationships between target feature vectors and weight vectors are determined in advance through the sliding window process of FIG. 5, the matching relationships determined in advance may be used for the convolution operation as described above.

Referring to FIG. 4 again, in operation 440, the processing apparatus generates an intermediate feature vector by performing a multiplication operation between the target feature vector Tᵢ and the weight vector. Here, the multiplication operation may correspond to an element-wise multiplication. For example, an x-th element of the intermediate feature vector may be determined based on a product of an x-th element of the target feature vector Tᵢ and an x-th element of the weight vector. In this example, the unit for performing the multiplication operation may be determined based on a SIMD operation unit (for example, 4, 8, 16, 32, 64, 128, ...). Thus, effective SIMD processing may be possible.

Hereinafter, the intermediate feature vector (or intermediate element) may be indicated by M1ₙ₁ₙ₂. Here, 1 may denote the type of a weight element used to generate the intermediate feature vector, n1 may denote an index of a buffer space in which the intermediate feature vector is stored, and n2 may denote an index indicating the ordinal position of the intermediate feature vector accumulated in the buffer space. For example, M1₁₁ may be an intermediate feature vector generated based on a first-type weight element and stored firstly in a first buffer space. M1₆₆ may be an intermediate feature vector generated based on aa first-type weight element and stored sixthly in a sixth buffer space.

In operation 450, the processing apparatus accumulates the intermediate feature vector in a hidden buffer. The hidden buffer may correspond to a memory space to store hidden feature vectors. The processing apparatus may assign the hidden buffer to the memory space and generate hidden feature vectors by accumulating intermediate feature vectors in the hidden buffer. In operation 460, the processing apparatus determines whether there is a completed hidden feature vector in the hidden buffer. If all intermediate feature vectors needed for completing the hidden feature vector (hereinafter, referred to as needed elements) are accumulated in the buffer space, the hidden feature vector may be completed. Hereinafter, the hidden feature vector may be indicated by Hₚ. Here, p may denote an index of the hidden feature vector.

Needed elements for completing a hidden feature vector may be determined based on a target feature vector and a weight vector used for each 2D convolution operation of a depth-wise convolution operation. For example, to generate a hidden feature vector H₁, an intermediate feature vector M1₁₁ generated based on a multiplication operation between the target feature vector T₁ and the weight vector W1₅, an intermediate feature vector M1₁₂ generated based on a multiplication operation between the target feature vector T₂ and the weight vector W1₆, an intermediate feature vector M1₁₃ generated based on a multiplication operation between the target feature vector T₅ and the weight vector W1₈, and an intermediate feature vector M1₁₄ generated based on a multiplication operation between the target feature vector T₆ and the weight vector W1₉ may be required.

For example, the processing apparatus may generate the hidden feature vector H₁ by accumulating the intermediate feature vectors M1₁₁, M1₂, M1₁₃, and M1₁₄. If the intermediate feature vectors M1₁₁, M1₂, M1₁₃, and M1₁₄ are all accumulated in the hidden buffer, the hidden feature vector H₁ may be completed. For example, if the intermediate feature vector M1₁₁ is generated, the processing apparatus may store the intermediate feature vector M1₁₁ in a first space of the hidden buffer. Here, a space may refer to a memory space. After that, if the intermediate feature vector M1₁₂ is generated, the processing apparatus may load the intermediate feature vector M1₁₁ from the first space, generate cumulative data by accumulating the intermediate feature vector M1₁₁ and the intermediate feature vector M1₁₂, and store the cumulative data in the first space. After that, if the intermediate feature vector M1₁₃ is generated, the processing apparatus may load the cumulative data from the first space, generate new cumulative data by accumulating the cumulative data and the intermediate feature vector M1₁₃, and store the new cumulative data in the first space. Through the process as described above, if the intermediate feature vector M1₁₄ is accumulated in the first space, the hidden feature vector H₁ may be completed and stored in the first space.

If there is no completed hidden feature vector in the hidden buffer, operation 420 is performed again after increasing i (for example, increasing by 1). If there is a completed hidden feature vector in the hidden buffer, operation 470 is performed. In operation 470, the processing apparatus generates an output feature vector Oⱼ by performing a point-wise convolution operation. The point-wise convolution operation may perform multiplication and accumulation (MAC) operations between the hidden feature vector and weight vectors of the second-type weight element.

In operation 480, the processing apparatus determines whether j is equal to WxH. An output feature map may include WxH output feature vectors. Thus, j being equal to WxH indicates that a (WxH)-th output feature vector O_{W×H} is generated in operation 470, and the output feature map may be completed as the output feature vector O_{W×H} is generated In this example, the completed output feature map may be returned, and the DSC may be terminated. If j is not equal to WxH, that is, if j is less than WxH, operation 420 is performed again after increasing i and j (for example, increasing by 1).

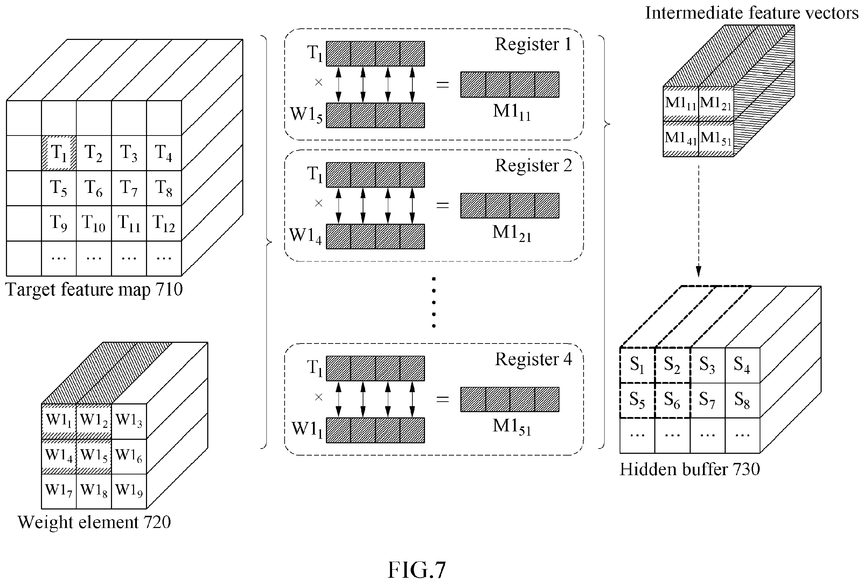

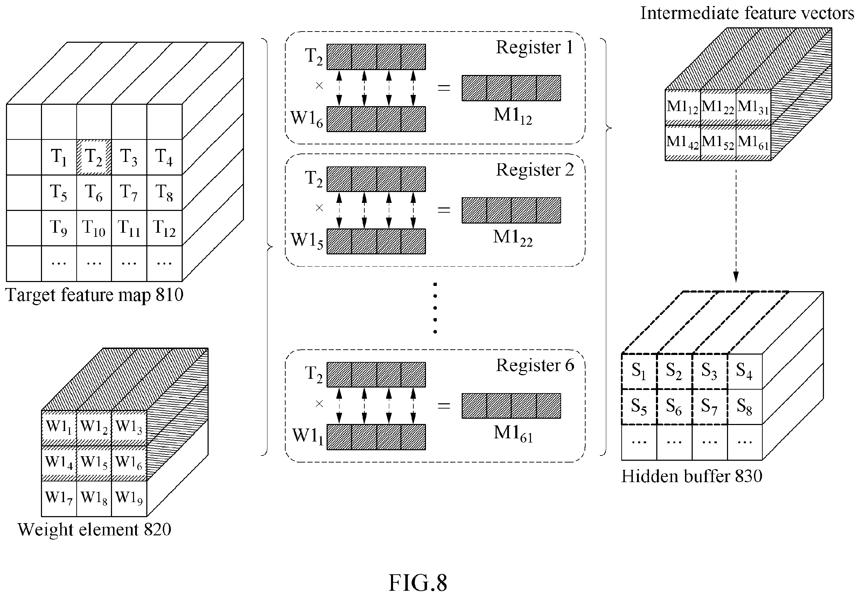

FIGS. 7 and 8 illustrate an example of generating and storing intermediate feature vectors. As described above, a multiplication operation may be performed based on matching relationships between each target feature vector Tᵢ and weight vectors W1₁ to W1₉, and intermediate feature vectors may be accumulated in a hidden buffer 830 according to the multiplication operation. FIG. 7 illustrates an operation process associated with the target feature vector T₁, and FIG. 8 illustrates an operation process associated with the target feature vector T₂. The process as in FIGS. 8 and 7 is repeated on the remaining target feature vectors T₃, T₄, ..., such that hidden feature vectors may be generated in the hidden buffer 830. In FIGS. 7 and 8, target feature maps 710 and 810 and weight elements 720 and 820 may each be in an interleaved format. Further, the target feature vectors T₁, T₂, ..., the weight vectors W1₁, W1₂, ..., and the intermediate feature vectors M1₁₁, M1₁₂, ... may each correspond to a channel direction.

Referring to FIG. 7, multiplication operations between the target feature vector T₁ of the target feature map 710 and the weight vectors W1₅, W1₄, W1₂, and W1₁ of the weight element 720 may be performed. Here, the weight element 720 may be of a first type, and the multiplication operations may correspond to element-wise multiplications. In this example, the unit for performing the multiplication operations may be determined based on a SIMD operation unit. FIG. 7 shows an example of 4-SIMD. Intermediate feature vectors M1₁₁, M1₂₁, M1₄₁, and M1₅₁ may be generated according to the multiplication operations and stored in a hidden buffer 730. The intermediate feature vectors M1₁₁, M1₂₁, M1₄₁, and M1₅₁ may be stored in Register 1 to Register 4 during the multiplication operation process, and stored in spaces S₁, S₂, S₅, and S₆ of the hidden buffer 730 if the multiplication operations are completed.

Referring to FIG. 8, multiplication operations between the target feature vector T₂ of the target feature map 810 and the weight vectors W1₆, W1₅, W1₄, W1₃, W1₂, and W1₁ of the weight element 820 may be performed. Here, the multiplication operations may correspond to element-wise multiplications. Intermediate feature vectors M1₁₂, M1₂₂, M1₃₁, M1₄₂, M1₅₂, and M1₆₁ may be generated according to the multiplication operations and stored in a hidden buffer 830. The intermediate feature vectors M1₂, M1₂₂, M1₃₁, M1₄₂, M1₅₂, and M1₆₁ may be stored in Register 1 to Register 6 during the multiplication operation process, and stored in spaces S₁, S₂, S₃, S₅, S₆, and S₇ of the hidden buffer 830 if the multiplication operations are completed.

Since the intermediate feature vector M1₁₁ is stored in the space S₁ through the process of FIG. 7, the intermediate feature vector M1₁₁ and the intermediate feature vector M1₁₂ may be accumulated in the space S₁ through the process of FIG. 8. For example, the processing apparatus may load the intermediate feature vector M1₁₁ stored in the space S₁ to a register, accumulate the intermediate feature vector M1₁₁ and intermediate feature vector M1₁₂, and store a cumulative result in the space S₁. If the accumulation process as described above is repeated on the intermediate feature vectors M1₁₁, M1₁₂, M1₁₃, and M1₁₄, a hidden feature vector H₁ may be generated in the space S₁.

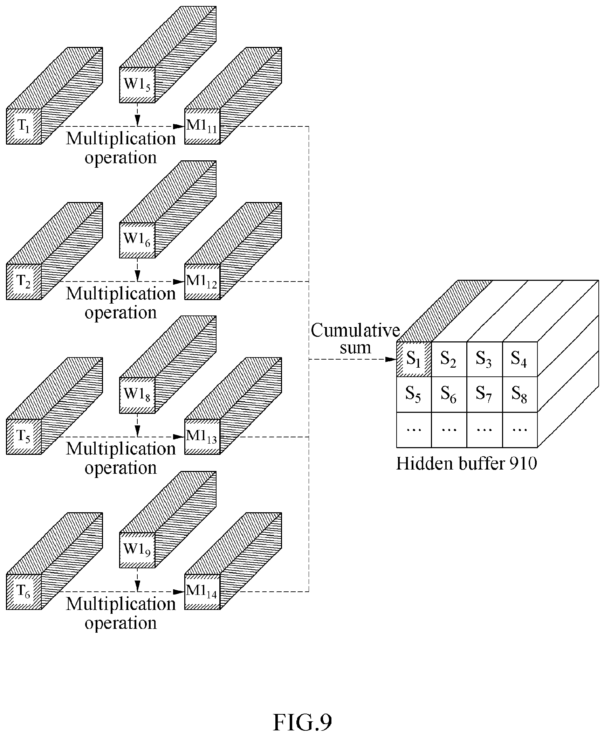

FIG. 9 illustrates an example of generating hidden feature vectors based on an accumulation of intermediate feature vectors. Referring to FIG. 9, an intermediate feature vector M1₁₁ is generated according to a multiplication operation between a target feature vector T₁ and a weight vector W1₅, an intermediate feature vector M1₁₂ is generated according to a multiplication operation between a target feature vector T₂ and a weight vector W1₆, an intermediate feature vector M1₁₃ is generated according to a multiplication operation between a target feature vector T₅ and a weight vector W1₈, and an intermediate feature vector M1₁₄ is generated according to a multiplication operation between a target feature vector T₆ and a weight vector W1₉. In this process, the intermediate feature vectors M1₁₁ to M1₁₄ are accumulated in a space S1 of a hidden buffer 910. If the intermediate feature vectors M1₁₁ to M1₁₄ are all accumulated in the space S₁, a hidden feature vector H₁ may be generated in the space S₁. When the process described above is repeated, hidden feature vectors H₂, H₃, ... may be generated in other spaces S₂, S₃, ... of the hidden buffer 910 as well.

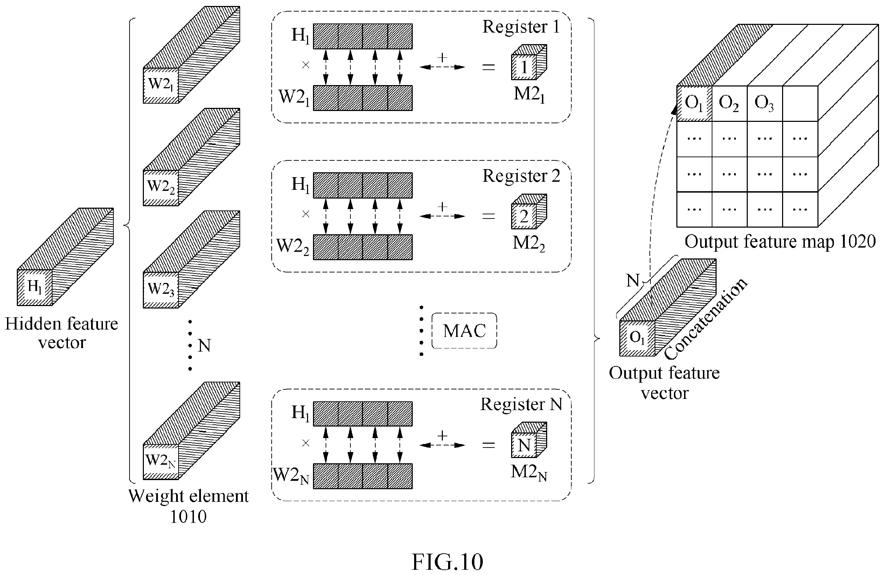

FIG. 10 illustrates an example of generating an output feature vector through a point-wise convolution operation. As described above, if a hidden feature vector Hₚ is completed, a point-wise convolution operation with respect to the hidden feature vector Hₚ may be performed, such that an output feature vector Oⱼ may be generated. A weight element 1010 and an output feature map 1020 may each be in an interleaved format. Further, the hidden feature vector H1, weight vectors W2₁, W2₂, ..., and output feature vectors O₁, O₂, ... may each correspond to a channel direction. Although not shown in FIG. 10, each of the other hidden feature vectors H₂, H₃, ... may also correspond to a channel direction.

Referring to FIG. 10, intermediate elements M2₁ to M2_{N} are generated based on MAC operations between the hidden feature vector H₁ and the weight vectors W2₁ to W2_{N} of the weight element 1010. Here, the weight element 1010 may be of a second type, and multiplication operations of the MAC operations may correspond to element-wise multiplications. For example, a MAC operation between the hidden feature vector H₁ and the weight vector W2₁ may include an element-wise multiplication operation between each hidden element of the hidden feature vector H₁ and each weight element of the weight vector W2₁, and an accumulation operation of elements corresponding to results of element-wise multiplications. In this example, the MAC operations may be performed based on a SIMD operation unit.

The intermediate elements M2₁ to M2_{N} may be stored in Register 1 to Register N during the MAC operation process. When the MAC operations are completed, concatenation may be performed on the intermediate elements M2₁ to M2_{N}, such that an output feature vector O₁ may be generated. If WxH output feature vectors Oⱼ are generated through the process as described above, an output feature map 1020 may be completed.

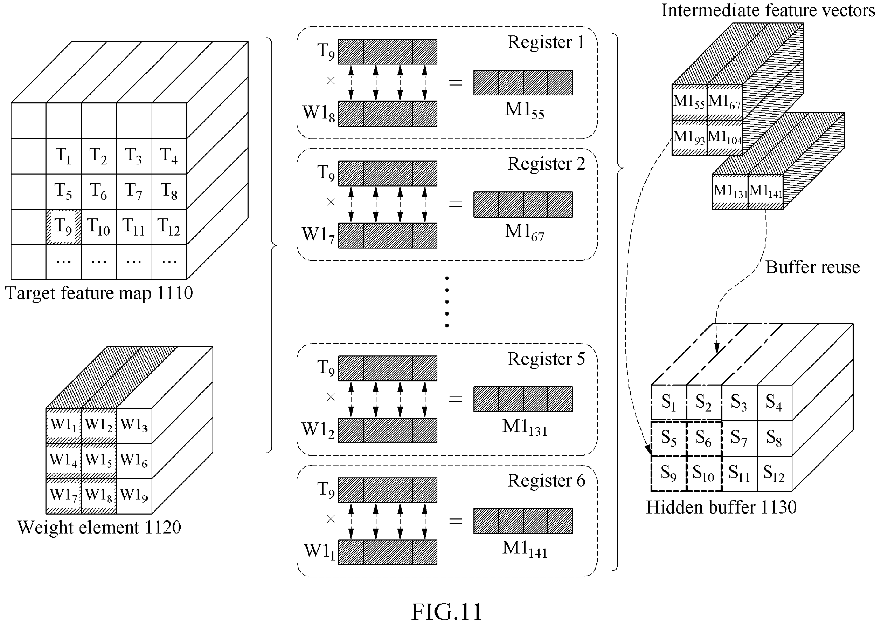

FIG. 11 illustrates an example of reusing a buffer. As described above, a depth-wise convolution operation may be performed for each target feature vector, and if a hidden feature vector is completed through the depth-wise convolution operation, a point-wise convolution operation may be performed for each completed hidden feature vector. For example, if a first hidden feature vector is generated through a depth-wise convolution operation for each target feature vector, a first output feature vector may be generated through a point-wise convolution operation with respect to the first hidden feature vector. If the first output feature vector is generated, the first hidden feature vector is not used for a DSC any further. Thus, a memory space for the first hidden feature vector may be reused to store another hidden feature vector. For example, a first space for a first hidden feature vector may be reused to accumulate intermediate feature vectors to be used to generate a second hidden feature vector.

Referring to FIG. 11, multiplication operations between a target feature vector T₉ of a target feature map 1110 and weight vectors W1₈, W1₇, W1₅, W1₄, W1₂, and W1₁ of a weight element 1120 may be performed. Intermediate feature vectors M1₅₅, M1₆₇, M1₉₃, M1₁₀₄, M1₁₃₁, and M1₁₄₁ may be generated according to the multiplication operations and stored in a hidden buffer 1130. In this example, the first row of the hidden buffer 1130 may be empty. Since point-wise convolution operations on hidden feature vectors in spaces S₁, S₂, S₃, and S₄ are already completed and output feature vectors corresponding to the hidden feature vectors in the spaces S₁, S₂, S₃, and S₄ are already generated, the hidden feature vectors in the spaces S₁, S₂, S₃, and S₄ may not be used any further. Thus, such spaces S₁, S₂, S₃, and S₄ may be initialized to be empty, or may be reused to store other data (for example, other hidden feature vectors) without initialization.

In the example of FIG. 11, intermediate feature vectors M1₅₅, M1₆₇, M1₉₃, and M1₁₀₄ may be accumulated with existing intermediate feature vectors stored in spaces S₅, S₆, S₉, and S₁₀, and then stored in the spaces S₅, S₆, S₉, and S₁₀, and intermediate feature vectors M1₁₃₁ and M1₁₄₁ may be stored in the empty spaces S₁ and S₂. In the example above, the spaces S₁ and S₂ may be spaces previously used to generate hidden feature vectors H₁ and H₂. After output feature vectors O₁ and O₂ corresponding to the hidden feature vectors H₁ and H₂ are generated, the spaces S₁ and S₂ may be reused to store the intermediate feature vectors M1₁₃₁ and M1₁₄₁.

For example, it may be assumed in the example of FIG. 11 that two-line zero padding is applied to a horizontal direction and a vertical direction of the target feature map 1110 and that the width of the target feature map 1110 and the width of the hidden buffer 1130 are the same. In this example, the height of the hidden buffer 1130 may be "3", which may be less than the height of the target feature map 1110. If there is no reuse operation as described above, a memory space of the same size as the target feature map 1110 may be required to store the hidden feature map. Therefore, a memory space for storing a hidden feature map may be saved through the reuse operation.

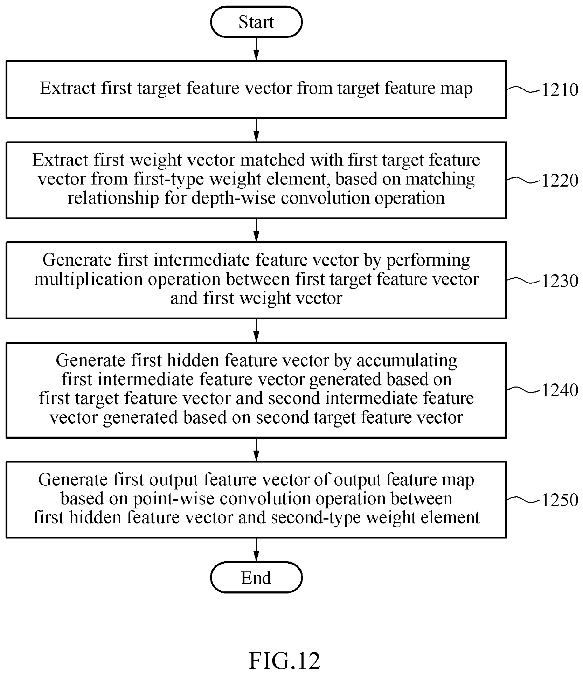

FIG. 12 illustrates an example of processing a convolution operation. The operations in FIG. 12 may be performed in the sequence and manner as shown, although the order of some operations may be changed or some of the operations omitted without departing from the scope of the illustrative examples described. Many of the operations shown in FIG. 12 may be performed in parallel or concurrently. One or more blocks of FIG. 12, and combinations of the blocks, can be implemented by special purpose hardware-based computer, such as a processor, that perform the specified functions, or combinations of special purpose hardware and computer instructions. In addition to the description of FIG. 12 below, the descriptions of FIGS. 1-11 are also applicable to FIG. 12, and are incorporated herein by reference. Thus, the above description may not be repeated here.

Referring to FIG. 12, in operation 1210, a processing apparatus extracts a first target feature vector from a target feature map. In operation 1220, the processing apparatus extracts a first weight vector matched with the first target feature vector from a first-type weight element, based on a matching relationship for a depth-wise convolution operation. In operation 1230, the processing apparatus generates a first intermediate feature vector by performing a multiplication operation between the first target feature vector and the first weight vector. In operation 1240, the processing apparatus generates a first hidden feature vector by accumulating the first intermediate feature vector generated based on the first target feature vector and a second intermediate feature vector generated based on a second target feature vector. In operation 1250, the processing apparatus generates a first output feature vector of an output feature map based on a point-wise convolution operation between the first hidden feature vector and a second-type weight element.

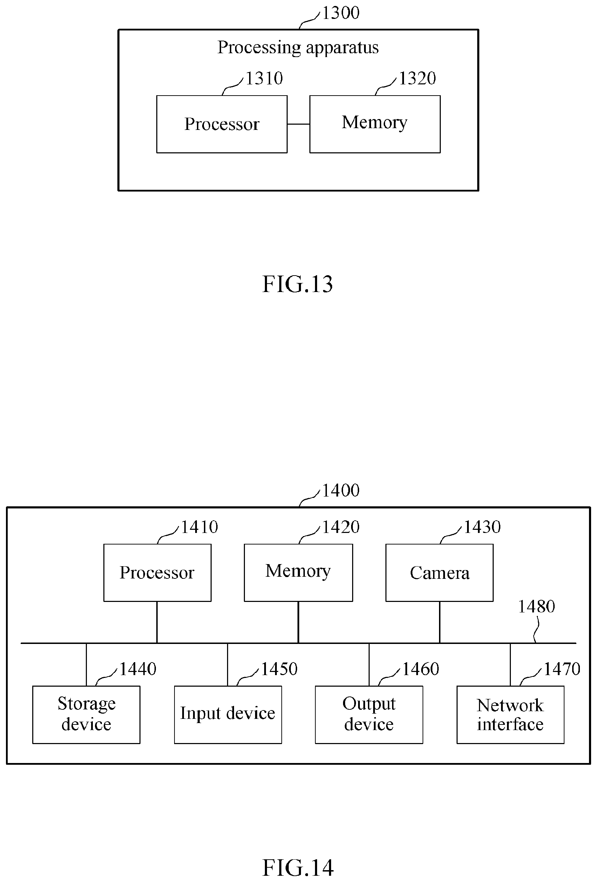

FIG. 13 illustrates an example of a processing apparatus for processing a convolution operation. Referring to FIG. 13, a processing apparatus 1300 includes a processor 1310 and a memory 1320. The memory 1320 is connected to the processor 1310 and may store instructions executable by the processor 1310, data to be computed by the processor 1310, or data processed by the processor 1310. The memory 1320 may include a non-transitory computer-readable medium (for example, a high-speed random access memory) and/or a non-volatile computer-readable medium (for example, at least one disk storage device, flash memory device, or another non-volatile solid-state memory device).

The processor 1310 may execute instructions to perform the one or more operations described with reference to FIGS. 1 through 12. For example, the processor 1310 may extract a first target feature vector from a target feature map, extract a first weight vector matched with the first target feature vector from a first-type weight element, based on matching relationships for depth-wise convolution operations between target feature vectors of the target feature map and weight vectors of the first-type weight element, generate a first intermediate feature vector by performing a multiplication operation between the first target feature vector and the first weight vector, generate a first hidden feature vector by accumulating the first intermediate feature vector generated based on the first target feature vector and a second intermediate feature vector generated based on a second target feature vector, and generate a first output feature vector of an output feature map based on a point-wise convolution operation between the first hidden feature vector and a second-type weight element.

FIG. 14 illustrates an example of an electronic device. Referring to FIG. 14, an electronic device 1400 may structurally and/or functionally include the processing apparatus 100 of FIG. 1 and the processing apparatus 1300 of FIG. 13.

The electronic device 1400 may include a processor 1410, a memory 1420, a camera 1430, a storage device 1440, an input device 1450, an output device 1460, and a network interface 1470. The processor 1410, the memory 1420, the camera 1430, the storage device 1440, the input device 1450, the output device 1460, and the network interface 1470 may communicate with each other through a communication bus 1480. For example, the electronic device 1400 may be implemented as at least a part of a mobile device such as a mobile phone, a smart phone, a PDA, a netbook, a tablet computer or a laptop computer, a wearable device such as a smart watch, a smart band or smart glasses, a computing device such as a desktop or a server, a home appliance such as a television, a smart television or a refrigerator, a security device such as a door lock, or a vehicle such as a smart vehicle.

The processor 1410 executes instructions or functions to be executed in the electronic device 1400. For example, the processor 1410 may process the instructions stored in the memory 1420 or the storage device 1440. The processor 1410 may perform the one or more operations described through FIGS. 1 to 13.

The memory 1420 stores data for biometric detection, such as face detection. The memory 1420 may include a computer-readable storage medium or a computer-readable storage device. The memory 1420 may store instructions to be executed by the processor 1410 and may store related information while software and/or an application is executed by the electronic device 1400.

The camera 1430 may capture a photo and/or a video. For example, the camera 1430 may capture a face image including a face of a user. The camera 1430 may provide a 3D image including depth information related to objects.

The storage device 1440 includes a computer-readable storage medium or computer-readable storage device. The storage device 1440 may store a greater quantity of information than the memory 1420 and for a long time. For example, the storage device 1440 may include a magnetic hard disk, an optical disk, a flash memory, a floppy disk, or other non-volatile memories known in the art.

The input device 1450 may receive an input from the user in traditional input manners through a keyboard and a mouse, and in new input manners such as a touch input, a voice input, and an image input. For example, the input device 1450 may include a keyboard, a mouse, a touch screen, a microphone, or any other device that detects the input from the user and transmits the detected input to the electronic device 1400.

The output device 1460 may provide an output of the electronic device 1400 to the user through a visual, auditory, or tactile channel. The output device 1460 may include, for example, a display, a touch screen, a speaker, a vibration generator, or any other device that provides the output to the user. The network interface 1470 may communicate with an external device through a wired or wireless network.

The processing apparatus 100, the processing apparatus 1300, the electronic device 1400, and other apparatuses, units, modules, devices, and other components described herein are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, multiple-instruction multiple-data (MIMD) multiprocessing, a controller and an arithmetic logic unit (ALU), a DSP, a microcomputer, an FPGA, a programmable logic unit (PLU), a central processing unit (CPU), a graphics processing unit (GPU), a neural processing unit (NPU), or any other device capable of responding to and executing instructions in a defined manner.

The methods that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In an example, the instructions or software includes at least one of an applet, a dynamic link library (DLL), middleware, firmware, a device driver, an application program storing the method of processing a convolution operation on a layer in a neural network. In another example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims, and all variations within the scope of the claims are to be construed as being included in the disclosure.

The following clauses describe additional aspects of the invention.
Clause 1. An electronic device, comprising: a memory configured to store executable instructions; and a processor configured to execute the instructions to: extract a first target feature vector from a target feature map, extract a first weight vector matched with the first target feature vector from a first-type weight element, based on matching relationships for depth-wise convolution operations between target feature vectors of the target feature map and weight vectors of the first-type weight element, generate a first intermediate feature vector by performing a multiplication operation between the first target feature vector and the first weight vector, generate a first hidden feature vector by accumulating the first intermediate feature vector generated based on the first target feature vector and a second intermediate feature vector generated based on a second target feature vector, and generate a first output feature vector of an output feature map based on a point-wise convolution operation between the first hidden feature vector and a second-type weight element.
Clause 2. The electronic device of clause 3, wherein the first hidden feature vector comprises the first intermediate feature vector and the second intermediate feature vector, and is completed in response to all needed elements being accumulated.

## Claims

1. A processor-implemented method of processing a convolution operation on a layer in a neural network, the method comprising:
extracting a first target feature vector from a target feature map;
extracting a first weight vector matched with the first target feature vector from a first-type weight element, based on matching relationships for depth-wise convolution operations between target feature vectors of the target feature map and weight vectors of the first-type weight element;
generating a first intermediate feature vector by performing a multiplication operation between the first target feature vector and the first weight vector;
generating a first hidden feature vector by accumulating the first intermediate feature vector generated based on the first target feature vector and a second intermediate feature vector generated based on a second target feature vector; and
generating a first output feature vector of an output feature map based on a point-wise convolution operation between the first hidden feature vector and a second-type weight element.

2. The method of claim 1, wherein the first hidden feature vector comprises the first intermediate feature vector and the second intermediate feature vector, and is completed in response to all needed elements being accumulated, wherein the needed elements are preferably determined based on the first target feature vector and the first weight vector.

3. The method of claim 1 or 2, wherein the generating of the first hidden feature vector comprises generating the first hidden feature vector based on accumulating the first intermediate feature vector and the second intermediate feature vector in a first space of a hidden buffer, wherein the first space of the hidden buffer is preferably reused to accumulate intermediate feature vectors used to generate a second hidden feature vector, in response to the first output feature vector being generated.

4. The method of any of the preceding claims, wherein a plurality of weight vectors including the first weight vector are matched with the first target feature vector based on the matching relationships, and
a plurality of hidden vectors is generated based on multiplication operations between the first target feature vector and respective weight vectors of the plurality of weight vectors.

5. The method of any of the preceding claims, wherein the target feature map, the first-type weight element, the second-type weight element, and the output feature map are each in an interleaved format.

6. The method of any of the preceding claims, wherein the first target feature vector, the first weight vector, the first intermediate feature vector, the second intermediate feature vector, the first hidden feature vector, and the first output feature vector each correspond to a channel direction.

7. The method of any of the preceding claims, further comprising:
extracting the second target feature vector from the target feature map;
extracting a second weight vector matched with the second target feature vector from the first-type weight element based on the matching relationships; and
generating the second intermediate feature vector by performing a multiplication operation between the second target feature vector and the second weight vector.

8. The method of any of the preceding claims, wherein the generating of the first output feature vector comprises generating the first output feature vector by performing point-wise convolution operations between the first hidden feature vector and respective weight vectors of the second-type weight element.

9. The method of any of the preceding claims, wherein the depth-wise convolution operation and the point-wise convolution operation constitute at least a portion of a depth-wise separable convolution (DSC) operation.

10. The method of any of the preceding claims,, wherein the first-type weight element is used to extract a spatial feature, and the second-type weight element is used to extract a combination feature.

11. The method of any of the preceding claims, wherein the target feature map corresponds to an input feature map or a hidden feature map.

12. The method of any of the preceding claims, wherein the depth-wise convolution operation and the point-wise convolution operation are each processed for each single instruction multiple data (SIMD) operation.

13. A non-transitory computer-readable storage medium storing instructions that, when executed by a processor, cause the processor to perform the method of any of the preceding claims.

14. An apparatus for processing a convolution operation on a layer in a neural network, the apparatus comprising:
a memory configured to store executable instructions; and
a processor configured to execute the instructions to:
extract a first target feature vector from a target feature map,
extract a first weight vector matched with the first target feature vector from a first-type weight element, based on matching relationships for depth-wise convolution operations between target feature vectors of the target feature map and weight vectors of the first-type weight element,
generate a first intermediate feature vector by performing a multiplication operation between the first target feature vector and the first weight vector,
generate a first hidden feature vector by accumulating the first intermediate feature vector generated based on the first target feature vector and a second intermediate feature vector generated based on a second target feature vector, and
generate a first output feature vector of an output feature map based on a point-wise convolution operation between the first hidden feature vector and a second-type weight element.

15. The apparatus of claim 14, wherein the processor is further configured to execute the instructions to perform the method of any of claims 2-12.
